# EUROPEAN PATENT APPLICATION

(11) **EP 1 738 973 A1**
(43) Date of publication of application: **03.01.2007**
(21) Application number: 05105709.9
(22) Date of filing: 27.06.2005
(51) Int. Cl.: B60R 21/34

(54) **Safety system for pedestrian protection**

(71) Applicant: IEE INTERNATIONAL ELECTRONICS & ENGINEERING S.A., 6468 Echternach (LU)
(72) Inventor: Beilfuss, Hans-Jürgen, 2410, Luxembourg (LU)
(74) Representative: Beissel, Jean

(57) **Abstract**

A safety system for pedestrian protection in an automotive vehicle comprises actuator means associated to a vehicle hood (12) or bonnet for the controlled lifting of a trailing edge of said hood. According to the invention, said actuator means comprises at least one hydraulic cylinder (10), said hydraulic cylinder (10) being connected via a hydraulic circuit to an existing hydraulic pump (14) of a braking circuit of said vehicle.

## Description

### Introduction

The present invention generally relates to a safety system for pedestrian protection and more specifically to a device for lifting a part of the vehicle hood in order to minimize the impact violence of the pedestrian on the vehicle structure.

When a pedestrian is hit by a motor vehicle, for example a car, one type of injury can be caused by a subsequent collision between the pedestrian's head and the hood of the vehicle. In order to minimize these injuries, vehicle manufacturers have started developing safety systems for automotive vehicles, which should help to protect pedestrians in case of a car/pedestrian collision. Such safety systems comprise one or more active systems, for example hoodmounted airbags or energy-absorbing hood panels.

An energy-absorbing hood is disclosed e.g. in International patent application WO-A-03/086826. This document discloses a safety system in which an hood of a vehicle is mounted by specifically adapted hinges to the vehicle structure. Pyrotechnic actuators are further provided for releasing the hinges and lifting the trailing edge of the hood with respect to the vehicle structure. While such pyrotechnic actuators are well suited for a fast deployment of the hood, these actuators have to be replaced after use. It follows that once the safety system has been triggered, the vehicle has to undergo repairs, which leads to unacceptable follow up costs for the vehicle owner.

### Object of the invention

The object of the present invention is to provide an improved safety system for pedestrian protection in an automotive vehicle.

### General description of the invention

This object is achieved by a safety system according to claim 1. This safety system for pedestrian protection in an automotive vehicle comprises actuator means associated to a vehicle hood or bonnet for the controlled lifting of a trailing edge of said hood. According to the invention, said actuator means comprises at least one hydraulic cylinder, said hydraulic cylinder being connected via a hydraulic circuit to an existing hydraulic pump of a braking circuit of said vehicle.

Unlike the pyrotechnic actuator of the device known from WO-A-03/086826, the hydraulic cylinder or hydraulic piston of the present invention is not destroyed or consumed during its operation and is thus reusable without any maintenance on the vehicle. In fact, after the operation of the hydraulic cylinder, the decrease of the hydraulic fluid pressure causes the piston to retreat into its initial position e.g. under the weight force of the hood. Once the piston has reached its initial position, the safety device is ready again. It follows that the triggering of the safety device of the present does not cause undesired follow-up repair costs and the safety device may accordingly be deployed less selectively than the known prior art devices. The follow-up costs associated with the deployment of prior art safety devices requires in fact, that the safety device is only deployed when an associated sensing device for the classification of an impact has determined with a very high degree of certainty that a pedestrian impact is detected. I contrast, as the deployment of the safety device of the present invention does not cause high follow-up repair costs, the safety device may be deployed even in cases, where the quality of classification of the impact is less good, i.e. in cases in which the degree of certainty of the classification is less high.

In addition to this, the hydraulic cylinder of the present invention is connected via a hydraulic circuit to an existing hydraulic pump of a braking circuit of the vehicle. It follows, that the safety system is partially using components, which are part of the initial equipment of modern vehicles. In fact, modern vehicles are usually equipped with a vehicle antilock braking system and/or with a traction control system, both using a hydraulic pump for their respective operation. By using this hydraulic pump for supplying the actuator of the safety system with a pressure fluid, the present invention enables to reduce the overall costs for original equipment of the vehicle.

In a referred embodiment of the invention, the actuator means comprises two hydraulic cylinders, one of said hydraulic cylinders being associated on each side of said vehicle to the trailing edge of said hood. The hydraulic cylinders are preferably arranged symmetrically with respect to the centre of the car, i.e. on the respective opposite corners of the trailing edge of the hood. Such an arrangement enables a uniform lifting of the trailing edge of the hood over the entire width of the vehicle.

In an advantageous embodiment of the invention, the at least one hydraulic cylinder comprises a telescopic cylinder. The great advantage telescopic cylinders have over any other types of cylinders is their ability to provide an exceptionally long stroke from a compact initial package. It follows that telescopic cylinders are well adapted to the reduced mounting space between the hood and the vehicle structure. In another embodiment, the at least one hydraulic cylinder comprises a stepped cylinder. Such a stepped cylinder provides a faster starting stroke, followed by a more powerful working stroke.

The hydraulic circuit comprises preferably a two-port hydraulic valve for controlling the action of said at least one hydraulic cylinder. The two-port hydraulic valve is preferably controlled by the ECU of the vehicle, which determines the need for deployment of the safety system based on the impact sensor data.

In order to ensure a very fast response of the safety system, the hydraulic circuit portion preferably comprises a hydraulic accumulator for storing hydraulic braking fluid under pressure. The hydraulic accumulator, which preferably comprises comprise a diaphragm accumulator and/or a spring loaded accumulator, may e.g. be connected in parallel to the hydraulic pump and be charged during normal operation of the vehicle.

It will be appreciated, that thy safety system further preferably comprises means for unlocking deployable hood hinges and/or deployable hood catches. These unlocking means are triggered simultaneously with the actuating hydraulic pistons to unlock the hinges or catches of the hood. It should further be noted, that the hydraulic circuit of the safety device should be decoupled in a fail-safe manner from the antilock braking system or the vehicle traction control system.

### Detailed description with respect to the figures

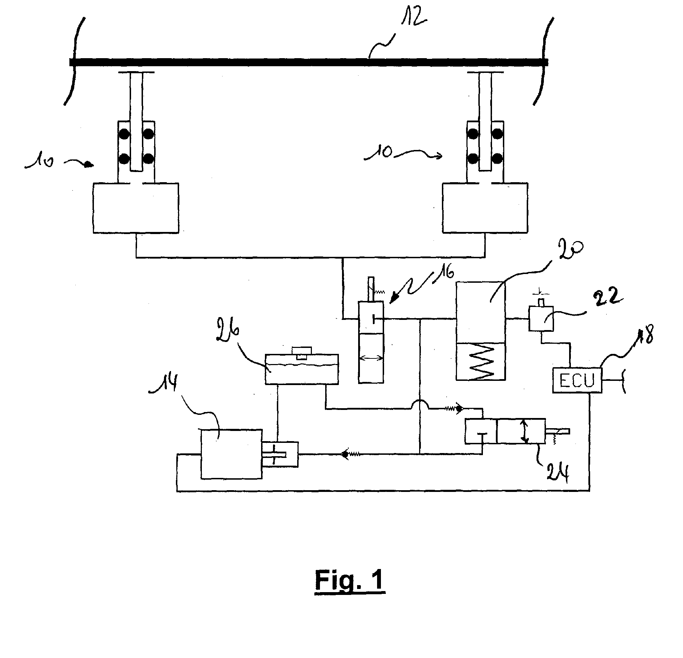

The present invention will be more apparent from the following description of a not limiting embodiment with reference to the attached drawing. This Fig. 1 shows the components of an embodiment of a safety system in accordance with the present invention.

In the shown embodiment, the safety system for pedestrian protection comprises two stepped hydraulic cylinders 10, which are associated with a trailing edge of a vehicle hood 12 for the controlled lifting of the trailing edge with respect to a (not shown) vehicle structure so as to provide a distance between the hood and the engine.

The hydraulic cylinders 10 are supplied with pressure fluid from an existing hydraulic pump of the vehicle braking system. Pump 14 may e.g. be the pump of the vehicle antilock braking system or the pump of the vehicle traction control system.

The triggering of the safety device, i.e. the operation of the hydraulic cylinders 10, is controlled via a two-port valve 16. This valve 16 is controlled by the control unit 18 of the vehicle, which generates a deployment signal based on impact sensor data.

In order to improve the response of the hydraulic system, a hydraulic accumulator 20, e.g. a diaphragm accumulator and/or a spring loaded accumulator, is provided in parallel to the pump 14. This accumulator 20 may be charged, during normal operation of the vehicle, to a predetermined pressure, which is measured by a pressure sensor 22.

Pressure discharge of the system may be achieved via control valve 24 to reservoir 26.

## Claims

1. Safety system for pedestrian protection in an automotive vehicle, said automotive vehicle comprising a hood having a leading edge and a trailing edge, said safety system comprising actuator means associated to said hood for the controlled lifting of the trailing edge of said hood, **characterised in that** said actuator means comprises at least one hydraulic cylinder, said hydraulic cylinder being connected via an hydraulic circuit to an hydraulic pump of a braking circuit of said vehicle.

2. Safety system according to claim 1, wherein said actuator means comprises two hydraulic cylinders, one of said hydraulic cylinders being associated on each side of said vehicle to the trailing edge of said hood.

3. Safety system according to claim 1 or 2, wherein said hydraulic cylinder comprises a telescopic cylinder.

4. Safety system according to claim 1 or 3, wherein said hydraulic cylinder comprises a stepped cylinder.

5. Safety system according to anyone of claims 1 to 4, wherein said hydraulic circuit comprises a two-port hydraulic valve for controlling the action of said at least one hydraulic cylinder.

6. Safety system according to anyone of claims 1 to 5, wherein said hydraulic circuit portion comprises a hydraulic accumulator for storing hydraulic fluid under pressure.

7. Safety system according to claim 6, wherein said hydraulic accumulator comprises a diaphragm accumulator and/or a spring loaded accumulator.

8. Safety system according to anyone of claims 1 to 7, wherein said hydraulic pump is the pump of a vehicle antilock braking system.

9. Safety system according to anyone of claims 1 to 7, wherein said hydraulic pump is the pump of a vehicle traction control system.

10. Safety system according to anyone of claims 1 to 9, further comprising means for unlocking deployable hood hinges and/or deployable hood catches.
